# EUROPÄISCHE PATENTSCHRIFT

(11) **EP 4 472 478 B1**
(45) Veröffentlichungstag und Bekanntmachung des Hinweises auf die Patenterteilung: **14.05.2025**
(21) Anmeldenummer: 23702438.5
(22) Anmeldetag: 27.01.2023
(51) Int. Cl.: A47L 15/24, B65G 17/06, B65G 17/46, A47L 15/00

(54) **TRANSPORTBAND FÜR EINE TRANSPORTSPÜLMASCHINE UND TRANSPORTSPÜLMASCHINE MIT EINEM SOLCHEN TRANSPORTBAND**
CONVEYOR BELT FOR A TRANSPORT DISHWASHING MACHINE AND TRANSPORT DISHWASHING MACHINE HAVING SUCH A CONVEYOR BELT
BANDE TRANSPORTEUSE POUR LAVE-VAISSELLE À TRANSPORTEUR ET LAVE-VAISSELLE À TRANSPORTEUR MUNI D'UNE TELLE BANDE TRANSPORTEUSE ET LAVE-VAISSELLE ÉQUIPÉ D'UNE TELLE BANDE TRANSPORTEUSE

(30) Priorität: 31.01.2022 DE 102022102112
(43) Veröffentlichungstag der Anmeldung: 11.12.2024
(73) Patentinhaber: Winterhalter Product & Technology GmbH, 88074 Meckenbeuren (DE)
(72) Erfinder: KUNZ, Martin, 88085 Langenargen (DE); HAGER, Hans Peter, 88094 Oberteuringen (DE)
(74) Vertreter: Appelt, Christian W.
(86) Internationale Anmeldenummer: PCT/EP2023/052028
(87) Internationale Veröffentlichungsnummer: WO 2023/144317

(56) Entgegenhaltungen:
- EP-B1- 2 825 086
- EP-B1- 3 282 920
- DE-A1- 102008 030 356
- DE-A1- 19 708 805

## Beschreibung

Die vorliegende Erfindung betrifft ein Transportband für eine Transportspülmaschine zur Aufnahme von zu reinigenden Gerätschaften, die mittels des Transportbandes in einer Transportrichtung durch die Transportspülmaschine geführt werden können.

Solche Transportbänder für Transportspülmaschinen bestehen häufig aus Kettenbändern, die hintereinander angeordnet sind, so dass das Transportband eine im wesentlichen ebene Bandunterlage bildet, auf die Gerätschaften, wie zum Beispiel Geschirr, Teller oder Gläser, aufgelegt werden, so dass sie danach durch die Transportspülmaschine transportiert werden.

Bei manchen Transportbändern für eine Transportspülmaschine umfasst das Transportband nicht nur die im wesentlichen ebene Bandunterlage, sondern ferner Haltefinger oder Haltevorrichtungen, die sich von der Ebene der Bandunterlage erstrecken, um eine bessere Positionierung der zu reinigenden Gerätschaften zu ermöglichen, beispielsweise um Geschirr oder ähnliche Elemente in schräger Anordnung auf das Transportband zu stellen.

Solche Transportbänder sind beispielsweise aus der DE 92 12 169.1 U1, aus der DE 10 2005 030 117 B3, aus der KR 10 0 985 620 B1 oder der CN 1 07 049 193 A bekannt.

Die KR 10 0 985 620 B1 befasst sich mit einer Gerätschaft zur automatischen Bestückung einer Transportspülmaschine mit Tellern. Hierfür transportiert ein Hilfsförderband den Teller in horizontaler Ausrichtung zum "Eingabebereich", der das Hauptförderband bestückt, indem er mittels eines geführten Fallvorgangs die Ausrichtung des Tellers von der Horizontalen in die Vertikale. Dieser geführte "Fallvorgang" positioniert den Teller auf einem Förderfinger, der sich aufgrund der Gewichtskraft des Tellers um eine Drehachse absenkt, bis die maximale Auslenkung der Drehung erreicht ist und der Teller an einem Anschlag am Ende des Förderfingers in einer vertikalen Position gehalten wird.

Die CN 1 07 049 193 A behandelt ein Transportband für eine Transportspülmaschine, das aus der Aneinanderreihung von mehreren Gitterbandmodulen besteht. Bei den Gitterbandmodulen handelt es sich um Essstäbchen-, Löffel-, Teetassen-, Glas-. Schüssel- und Tablett-Gitterbandmodule, die in festgelegter Reihenfolge und mittels besonderer Stützmechanismen miteinander verknüpft sind. Transportbänder für Transportspülmaschinen umfassen häufig eine Mehrzahl von Einzelgliedern, die entweder im Wesentlichen eben ausgebildet sind und/oder die im Wesentlichen eine ebene Bandunterlage bilden, und die ggf. Haltefinger beziehungsweise Haltevorrichtungen umfassen, die sich aus dieser Ebene erstrecken, wobei diese Einzelglieder oder einige der Einzelglieder Durchführungen oder ähnliche Haltevorrichtungen umfassen, die mit Verbindungsstangen verbunden werden.

Aus der EP 2 825 086 B1 ist eine weitere Transportspülmaschine mit einem Transportband zur Aufnahme von zu reinigenden Gerätschaften bekannt, wobei das Transportband einem wesentlichen ebene Bandunterlage aufweist.

Aus der EP 3 282 920 B1 schließlich ist ein Geschirrspülzubehör zum Halten eines Spülmaschinenkorbs bekannt wobei das Geschirrspülzubehör so ausgebildet ist, dass es einen Spülmaschinenkorb innerhalb einer Geschirrspülmaschine tragen kann. Das Geschirrspülzubehör kann dabei so ausgebildet sein, dass der Spülmaschinenkorb geneigt auf dem Geschirrspülzubehör positioniert werden kann

Die zu reinigenden Gerätschaften unterscheiden sich insbesondere im Hinblick auf ihre Größe und Eigenschaften erheblich, und es ist daher eine Aufgabe der vorliegenden Erfindung, ein Transportband zur Verfügung zu stellen, das für unterschiedliche Gerätschaften geeignet ist und einen möglichst zuverlässigen Spülvorgang ermöglicht.

Diese Aufgabe wird durch ein Transportband für eine Transportspülmaschine nach Anspruch 1, durch ein Transportband-Segment für ein Transportband gemäß Anspruch 13 und eine Transportspülmaschine gemäß Anspruch 14 mit einem solchen Transportband gelöst. Die Ansprüche 2 bis 12 betreffen besonders vorteilhafte Ausführungsformen des erfindungsgemäßen Transportbandes, Anspruch 15 betrifft eine besonders bevorzugte Ausführungsform der Transportspülmaschine gemäß Anspruch 14.

Gemäß der Erfindung umfasst das Transportband an einem Seitenbereich mehrere Positionierungs-Auflage-Elemente. Diese Positionierungs-Auflage-Elemente erstrecken sich in einer Richtung senkrecht (z-Richtung) zu der von der Bandunterlage gebildeten Ebene (x-y-Ebene) in eine vorgegebene erste Höhe. Die Positionierungs-Auflage-Elemente können sich dabei bei einer Ausführungsform im Wesentlichen ausschließlich in einer vertikalen Richtung (z-Richtung) erstrecken, es ist aber auch möglich, dass die Erstreckung neben der vertikalen Komponente auch eine horizontale Komponente aufweist. Die Positionierungs-Auflage-Elemente können daher auch gegenüber der Vertikalen (z-Richtung) geneigt ausgerichtet sein, sie erstrecken sich aber immer über eine gewisse Höhe über die von der Bandunterlage gebildete Ebene.

Die Positionierungs-Auflage-Elemente weisen einen Auflagebereich zur Auflage eines Teils einer zu reinigenden Gerätschaft auf, wobei der Auflagebereich sich in einer vorgegebenen zweiten Höhe über der von der Bandunterlage gebildeten Ebene befindet. Der Auflagebereich erstreckt sich über eine vorgegebene Länge in einer Richtung senkrecht zur Transportrichtung (x-Richtung) und parallel zur Bandunterlage oder in einer Richtung entlang der Breite des Transportbandes (y-Richtung), also in seitlicher Richtung (y-Richtung) und parallel zur Bandunterlage. Der Auflagebereich hat damit eine vorgegebene Erstreckung mit einer Komponente parallel zur Bandunterlage und einer vorgegebenen Länge senkrecht zur Transportrichtung, d. h. in Richtung entlang der Breite des Transportbandes.

Der Auflagebereich erstreckt sich in einer seitlichen Richtung (y-Richtung) oder in der Richtung senkrecht zur Transportrichtung und ist gegenüber der Bandunterlage geneigt ausgebildet. Die Neigung ist dabei so ausgebildet, dass der Auflagebereich in einer Richtung von dem Seitenbereich zu einem zentralen Bereich des Transportbandes eine abfallende Höhe über der Bandunterlage aufweist. Die Neigung des Auflagebereichs ist daher in einer seitlichen Richtung (y-Richtung), von außen nach innen, abfallend ausgebildet.

Darüber hinaus weist der Auflagebereich an seinen in Breitenrichtung des Transportbandes äußeren Ende einen Anschlag auf.

Das erfindungsgemäße Transportband mit den mehreren Positionierungs-Auflage-Elementen ist insbesondere für das Spülen von sogenannten Gastronorm-Behältern (GN) geeignet und stellt sicher, dass solche Gastronorm-Behälter durch die Benutzer zügig und sicher eingelegt bzw. auf das Transportband aufgesetzt werden.

Solche Gastronorm-Behälter (GN) werden insbesondere in der europäischen Norm EN 631-1:1993 beschrieben. Solche GN-Behälter können unterschiedliche Größen aufweisen, eine typische Größe weist ein Grundmaß von 325 × 530 mm auf. Kleinere oder größere GN Behälter können ebenfalls vorgesehen sein, typischerweise werden die Größen solcher kleineren GN Behälter im Form von Brüchen angegeben, beispielsweise ½ oder 2/1.

Durch die erfindungsgemäße Ausgestaltung des Transportbandes und insbesondere die Ausgestaltung der Positionierungs-Auflage-Elemente kann der Benutzer oder Bediener der Transportspülmaschine einen GN Behälter mit einem Rand auf den Auflagebereich eines oder mehrerer Positionierungs-Auflage-Elemente auflegen, wobei der Benutzer nicht darauf achten muss, dass diese Auflage an einer bestimmten Stelle des Auflagebereich erfolgt. In einem weiteren Schritt schiebt oder bewegt der Nutzer den GN Behälter in einer seitlichen Richtung, bis der Rand des GN Behälters an den Anschlag stößt, was nicht nur den GN Behälter in die gewünschte und vorgeschriebene Position bringt, sondern ferner auch eine direkte haptische Rückmeldung an den Benutzer gibt, dass sich der GN Behälter nun in seiner korrekten seitlichen Positionierung befindet. Der Benutzer kann dann, unter Beibehaltung dieser seitlichen Positionierung, den GN Behälter auf der gegenüberliegenden Seite, bei einer bevorzugten Realisierung auf der Bedienerseite, ablegen, womit der GN Behälter automatisch in seiner korrekten Position auf dem Transportband angeordnet ist.

Damit wird zum einen sichergestellt, dass der zur Verfügung stehende Raum auf dem Transportband optimal genutzt wird. Zum anderen wird insbesondere sichergestellt, dass der GN Behälter nicht seitlich über den zur Positionierung der zu reinigenden Gerätschaften zur Verfügung stehenden Raum hinausragt und möglicherweise beim Transport mit anderen Elementen der Transportspülmaschine in Kontakt tritt, was den Transport behindern kann.

Insbesondere wird sichergestellt, dass der GN Behälter nicht etwa auf seitliche Führungselemente der Transportspülmaschine oder Führungs- oder Transportelemente des Transportbandes, wie beispielsweise Bandrollen, rutscht, was zu erhöhten Bandwiderständen und im schlimmsten Fall zu einem Stillstand des Spülbetriebs führen könnte.

Gleichzeitig wird sichergestellt, dass der Nutzer diese Positionierung intuitiv und damit schnell und sicher durchführen kann, was insbesondere Fehler vermeidet und eine zügige und schnelle Nutzung und Beladung der Transportspülmaschine sicherstellt, wobei gleichzeitig der Nutzer entlastet wird und sich auch um andere Aspekte beim Betrieb der Transportspülmaschine oder sonstige Aufgaben kümmern kann.

Ein weiterer Vorteil der vorliegenden Erfindung liegt darin, dass der Benutzer aufgrund der intuitiven und sicheren Positionierungshilfe auch das Zutrauen hat, die GN Behälter in der gewünschten Orientierung auf das Transportband zu setzen: wie oben beschrieben haben die GN Behälter eine längere und eine kürzere Seite. Wenn die Breite des Transportbandes (Erstreckung in y-Richtung) für die längere Seite des GN Behälters ausreicht, was häufig der Fall ist, weil die Transportbänder in ihren Abmessungen extra für solche GN Behälter ausgelegt sind, können und sollen die GN Behälter so auf das Transportband aufgesetzt werden, dass ihre längere Seite sich quer zur Transportrichtung erstreckt, da auf diese Weise in kürzerer Zeit mehr GN Behälter durch die Transportspülmaschine geführt werden können.

Ohne die erfindungsgemäße Ausgestaltung des Transportbandes haben die Nutzer jedoch häufig die (berechtigte) Sorge, dass ein GN Behälter durch sie nicht korrekt auf dem Transportband positioniert ist, und um zu vermeiden, dass es (wegen einer nicht exakten Positionierung durch den Nutzer/Bediener) aufgrund eines möglichen seitlichen Herausragen des GN Behälters zu höheren Bandwiderständen oder sogar zu einem Stillstand des Spülbetriebs kommt, wie oben beschrieben, setzen sie häufig sicherheitshalber die GN Behälter in einer um 90° gedrehten Position auf das Transportband. Damit wird zwar in der Regel vermieden, dass die GN Behälter seitlich über das Transportband herausragen und dadurch den Spülbetrieb behindern, allerdings wird dadurch automatisch die maximale Reinigungsleistung der Transportspülmaschine beschränkt.

Eine solche Vorgehensweise ist für den Benutzer mit einem Transportband gemäß der vorliegenden Erfindung nicht mehr erforderlich, sodass automatisch die komplette Leistungsfähigkeit oder der maximale Durchsatz der Transportspülmaschine genutzt werden können. Dadurch können entweder mehr Gerätschaften, insbesondere GN Behälter, in der gleichen Zeit gespült werden, sodass eine größere Auslegung der Transportspülmaschinen (leistungsfähigere oder größere Transportspülmaschinen) nicht erforderlich ist, oder aber die Transportmaschinen erledigen das Spülen der vorhandenen und zu reinigenden Gerätschaften in einer kürzeren Zeit, was die Betriebskosten und auch den Verbrauch von Verbrauchsmaterial, Reinigungsmittel, Wasser sowie Energie/Strom reduziert, sodass die Transportmaschinen umweltfreundlicher betrieben werden können.

Die vorliegende Erfindung hat ferner den Vorteil, dass ein GN Behälter nicht nur im Hinblick auf seine seitliche Positionierung intuitiv und automatisch durch den Nutzer korrekt eingesetzt wird, sondern ferner durch die exakte Positionierung in einer seitlichen Richtung oder einer Breitenrichtung auch sichergestellt wird, dass die gewünschte Neigung des GN Behälters auf dem Transportband automatisch sichergestellt wird.

Dabei ist es besonders vorteilhaft, dass der GN Behälter nicht flach auf dem Transportband positioniert ist, da sich in diesem Falle Prozesswasser auf dem GN Behälter sammeln kann, das nicht abfließt. Aufgrund der relativ großen Ausdehnung der GN Behälter entsteht bei Transportspülmaschinen mit mehreren Zonen eine relativ lange Übergangszeit zwischen den Zonen, also ein Zeitraum, in dem sich Teile des GN Behälters noch in der einen Zone befinden, während sich andere Teile des GN Behälters bereits in der nächsten Zone befinden.

Besonders bei den GN Behälter-Größen 2/1, 1/1; 2/4; bzw. ½; 2/3; 1/3 kommt es vermehrt zu unerwünschten Durchmischung des Prozesswassers, wenn diese nur längs eingelegt werden. Sammelt sich nun auf einer Oberfläche des GN Behälters Prozesswasser, das nicht abfließen kann, führt dies zu einer unerwünschten Durchmischung des Prozesswassers aus der einen Zone mit dem Prozesswasser aus der anderen Zone, was letztendlich zu Effizienznachteilen und Leistungsnachteilen der Zonen führt. Die Durchmischung der Prozesswässer unterschiedlicher Spül-Zonen führt in der Nachspülzone zu einem erhöhten Eintrag an Alkalität. Diese Alkalität wird beim Prozess auf das Spülgut übertragen. Hierdurch wird das Nachspülergebnis verschlechtert. Wird Nachspülwasser in die Reinigungszone überführt, steht dieses für den Nachspülprozess nicht zur Verfügung. Zusätzlich wird die Alkalität der Reinigungszone durch den verdünnenden Effekt des Nachspülwassers auf das Prozesswasser der Reinigungszone verringert. Einen hohen Eintrag von Lauge aus der Reinigungszone in die Vorspülzone, ist von Nachteil, da dies die Temperatur in der Vorspülzone erhöht, was Proteine stärker an Oberflächen haften lässt. Im Allgemeinen bedeutetet die Durchmischung der Prozesswässer der Spülzonen immer einen überplanmäßigen Flüssigkeitsverlust für die betrachtete Spülzone, welches ein Verlust an Wasser, Spülchemie, und Energie in Form von Temperatur darstellt.

Eine exakte Positionierung der GN Behälter, die durch die vorliegende Erfindung ermöglicht wird, ermöglicht daher auch eine exakte Einstellung der Neigung der GN Behälter, so dass ein Abfließen von Flüssigkeiten von Oberflächen auf GN Behältern ermöglicht und gefördert wird, so dass eine Durchmischung des Prozesswassers deutlich verringert wird.

Dies wiederum sorgt dafür, dass erhöhte Betriebskosten für Reinigungsmittel, Wasser und Temperaturverluste oder Energie/Strom, die ansonsten durch die Durchmischung des Prozesswasser hervorrufen würden, vermieden werden.

Gleichzeitig behindern die Positionierungsauflage Elemente nicht das Einsetzen von anderen zu reinigenden Gerätschaften, sodass keinerlei Nachteile für diese anderen Gerätschaften, wie beispielsweise Teller, Geschirr oder Gläser, vorliegen, sodass das Transportband ohne Einschränkung weiterhin universell versendet werden kann.

Gemäß einer bevorzugten Ausführungsform ist der Auflagebereich der Positionierungs-Auflage-Elemente gegenüber der Bandunterlage um einen Winkel in einem Bereich von 5° bis 40° geneigt. Es hat sich herausgestellt, dass diese Neigung der Auflagebereiche besonders vorteilhaft ist, um eine exakte Positionierung durch den Nutzer und insbesondere eine möglichst gute haptische Rückmeldung an den Nutzer sicherzustellen. Besonders bevorzugt ist dabei eine Neigung einem Bereich von 10° bis 30°, insbesondere von 15° bis 25°, wobei bei einer bevorzugten Ausführungsform eine Neigung von 20° vorgesehen ist.

Gemäß der Erfindung sind an in Breitenrichtung des Transportbandes (y-Richtung) den Positionierungs-Auflage-Elementen gegenüberliegenden Positionen mehrere Aufnahmevorrichtungen vorgesehen, die in einer vorgegebenen dritten Höhe über der von der Bandunterlage gebildeten Ebene angeordnet sind. Hierdurch wird auf besonders zuverlässige Weise sichergestellt, dass auch die Neigung der zu reinigenden Gerätschaften, insbesondere der GN Behälter, sichergestellt ist, was einen Ablauf des Prozesswassers von Oberflächen der GN Behälter unterstützt.

Die Aufnahmevorrichtungen können dabei exakt gegenüber der Positionierungs-Auflage-Elemente angeordnet sein, also in Transportrichtung (x-Richtung) auf gleicher Höhe, es ist aber auch möglich, dass die Aufnahmevorrichtungen in Transportrichtung versetzte von den Positionierungsauflageelementen angeordnet sind. Bevorzugt entspricht die Anzahl der Aufnahmevorrichtungen der Anzahl der Positionsauflage Elemente, entweder über die gesamte Länge des Transportbandes betrachtet oder aber über einzelne Segmente des Transportbandes. Dies unterstützt zusätzlich die exakte Positionierung und insbesondere die exakte Neigung der eingesetzten GN Behälter.

Bei einer bevorzugten Ausführungsform sind die Aufnahmevorrichtungen an einem Seitenbereich des Transportbandes angeordnet, an dem der Benutzer bzw. Bediener steht (Bedienerseite), während die Positionierungs-Auflage-Elemente an dem gegenüberliegenden Seitenbereich des Transportbandes angeordnet sind, also dem Seitenbereich des Transportbandes, das der Bedienerseite gegenüberliegt oder das in der Nähe einer Maschinenrückwand liegt. Es hat sich herausgestellt, dass dadurch eine besonders einfache und komfortable Beladung durch den Nutzer ermöglicht wird.

Gemäß der Erfindung sind die Aufnahmevorrichtungen oder Auflageflächen der Aufnahmevorrichtungen in einer Höhe über der von der Bandunterlage gebildeten Ebene (oder relativ zu einer horizontalen Ebene) angeordnet, die oberhalb der Höhe liegt, in der sich die Auflagebereiche der Positionierungs-Auflage-Elemente erstrecken. Damit wird sichergestellt, dass die GN Elemente in einer Richtung geneigt sind, die sich in Richtung von dem Nutzer weg erstreckt, beispielsweise in Richtung auf eine Maschinenrückwand. Flüssigkeit bzw. Prozesswasser fließt daher auch bevorzugt in Richtung auf eine Maschinenrückseite ab.

Sollten, bei einer anderen Ausführungsform, die Positionierungs-Auflage-Elemente auf der Bedienerseite angeordnet sein, ist es bevorzugt, dass der Auflagebereich der Positionierungs-Auflage-Elemente gegenüber den auf der gegenüberliegenden Seite angeordneten Aufnahmevorrichtungen oder Auflageflächen der Aufnahmevorrichtungen erhöht ausgebildet ist, sodass auch bei dieser Konstellation das Prozesswasser in Richtung auf eine Maschinenrückseite und nicht in Richtung auf die Bedienerseite abfließt.

Bei einer bevorzugten Ausführungsform, bei der die Positionierungs-Auflage-Elemente an einer Seite des Transportbandes angeordnet sind, die einer Maschinenrückwand oder Maschinenrückseite zugewandt ist oder die auf der der Bedienerseite gegenüberliegenden Seite angeordnet ist, ist die Positionierung für den Bediener insbesondere vorteilhaft, da er beim Einsetzen der Gerätschaft, insbesondere beim Einsetzen des GN Behälters, diesen einfach auf einer beliebigen Stelle des Auflagebereich eines oder mehrerer Positionierungs-Auflage-Elemente aufsetzen und dann bis zum Anschlag des Positionierungs-Auflage-Elements schieben und dann auf der Bedienerseite, bevorzugt auf einer oder mehreren Aufnahmevorrichtungen, ablegen kann, sodass eine sichere Positionierung mittels einfacher Bedienung ermöglicht wird, ohne dass der Bediener/Nutzer eine exakte Position für die Gerätschaft, insbesondere den GN Behälter, auf der ihm abgewandten Seite treffen muss.

Bei einer besonderen Ausführungsform sind Aufnahmevorrichtungen und Positionierungs-Auflage-Elemente so angeordnet und ausgebildet, dass eine zu reinigende Gerätschaft, insbesondere ein Gastronorm-Behälter, um einen Winkel in einem Bereich von 2° bis 15°, bevorzugt um einen Winkel in einem Bereich von 2° bis 10°, insbesondere bevorzugt in einem Bereich von 3° bis 8° gegenüber der Bandunterlage oder gegenüber der Horizontalen geneigt ist. Dies stellt eine ausreichende Neigung zur Verfügung, die ein sicheres Abfließen von Prozesswasser von Flächen der zu reinigenden Gerätschaften sicherstellt.

Bei einer besonderen Ausführungsform ist das Transportband an seinen beiden Seitenrändern jeweils mit mehreren Bandrollen versehen, die die Positionierung und die Führung des Transportbandes in der Transportspülmaschine unterstützen. Bevorzugt ist der Auflagebereich mindestens eines Positionierungs-Auflage-Element in einer seitlichen Richtung (y-Richtung) so ausgebildet, dass er sich zumindest teilweise über einen Bereich erstreckt, in dem die Bandrollen angeordnet sind. Besonders bevorzugt erstreckt sich der Auflagebereich mindestens eines Positionierungs-Auflage-Elements in einer seitlichen Richtung oder in einer Breitenrichtung (y-Richtung), also in einer Richtung senkrecht zur Transportrichtung (x-Richtung), vollständig über eine oder mehrere Bandrollen.

Damit wird insbesondere sichergestellt, dass die Bandrollen gegenüber den einzusetzenden Gerätschaften, insbesondere gegenüber einem GN Behälter, abgeschirmt sind, sodass vermieden wird, dass Teile der zu reinigenden Gerätschaften auf einer oder mehreren Bandrollen aufliegen, was den Spülbetrieb behindern würde.

Bei einer besonderen Ausführungsform ist der Auflagebereich zumindest eines Positionierungs-Auflage-Element gradlinig oder im Wesentlichen gradlinig ausgebildet, sodass er insbesondere eine schiefe Ebene bildet. Bei anderen Ausführungsformen kann jedoch der Auflagebereich auch gekrümmt sein, beispielsweise in Form eines Kurvensegments ausgebildet sein. Bevorzugt ist dabei eine konvexe Seite oder die ausgewölbte Seite des Auflagenbereichs nach unten ausgerichtet, also in Richtung auf die durch das Transportband gebildete Ebene zu.

Eine solche geometrische Ausbildung unterstützt das haptische Gefühl des Nutzers und ermöglicht dadurch eine besonders sichere Positionierung der zu reinigenden Gerätschaften.

Bei einer besonders bevorzugten Ausführungsform ist der Auflagebereich mindestens eines Positionierungs-Auflage-Elements in Form einer Ebene ausgebildet, die um einen vorgegebenen Winkel gegenüber der Bandunterlage oder gegenüber der Horizontalen geneigt ist, wobei der Winkel bevorzugt in einem Bereich von 10° bis 30°, insbesondere bevorzugt in einem Bereich von 15° bis 25° liegt.

Der Auflagebereich der Positionierungs-Auflage-Elemente weist bevorzugt eine Breite von mindestens 0,5 cm, bevorzugt von mindestens 1 cm auf, gemessen in einer Transportrichtung. Diese Ausgestaltung stellt sicher, dass eine ausreichende Stabilität zur Verfügung gestellt wird, die insbesondere auch positiv die haptische Rückkopplung an den Nutzer unterstützt.

Bei der besonders bevorzugten Ausführungsform ist mindestens eines der Positionierungs-Auflage-Elemente lösbar/oder wiederbefestigbar an dem Transportband angebracht. Dies stellt eine besondere Flexibilität bei der Ausgestaltung des Transportbandes zur Verfügung, sodass dieses an die zu reinigenden Gerätschaften, beispielsweise auch an die Größe der reinigenden GN Behälter, flexibel angepasst werden kann.

Bei einer bevorzugten Ausführungsform ist der Anschlag des Auflagebereich senkrecht oder im Wesentlichen senkrecht ausgebildet. Ferner ist es einer solchen Ausführungsform auch möglich, dass sich der Anschlag des Auflagebereich in einem oberen Bereich wieder leicht in eine Richtung von außen nach innen neigt oder krümmt, beispielsweise durch eine Krümmung oder eine Abwicklung. Solche Ausführungsformen stellen eine besonders zuverlässige Positionierung und eine besonders deutliche haptische Rückmeldung an den Nutzer zur Verfügung.

Bei einer besonderen Ausführungsform umfasst das Transportband zwei oder mehrere Paare von in Transportrichtung benachbart angeordneten Positionierungs-Auflage-Elementen, wobei die zwei benachbart angeordneten Positionierungsauflage Elemente jedes Paars in einem vorgegebenen, gleichen Abstand voneinander in Transportrichtung angeordnet sind. Dies ermöglicht eine besonders vorteilhafte Anpassung an die Größe der zu spülenden bzw. zu reinigenden Gerätschaften, insbesondere GN Behälter.

Bei einer besonderen Ausführungsform besteht das Transportband aus einer Mehrzahl einzelner Transportband-Segmente. Dies ermöglicht eine einfache und kostengünstige Herstellung sowie eine besondere Flexibilität der Ausgestaltung des Transportbandes. Ferner ist es möglich, einzelne Segmente auszutauschen, wenn diese Beispielweise beschädigt sind oder durch Segmente mit anderen Eigenschaften ersetzt werden sollen.

Die vorliegende Erfindung betrifft ferner ein Transportband-Segment für ein solches Transportband. Ein solches Transportband-Segment weist mindestens ein, bevorzugt mehrere Positionierungs-Auflage-Elemente auf, wobei im Hinblick auf die besonderen Ausgestaltungen sowohl der Positionierungs-Auflage-Elemente als auch der anderen Elemente auf die obige Beschreibung verwiesen wird.

Die Erfindung betrifft ferner eine Transportspülmaschine mit einem Transportband, wie es oben beschrieben worden ist, wobei es sich bei der Transportspülmaschine bevorzugt um eine Transportmaschine mit mehreren Spülzonen und/oder bevorzugt um eine Mehrtank-Transportspülmaschine handelt. Bei solchen Transportmaschinen spielen die oben beschriebenen Vorteile eine besonders herausragende Rolle.

Die Erfindung und ihre Merkmale sowie ihre Vorteile werden anhand der nachfolgenden Figuren, die besondere Ausführungsformen darstellen, noch deutlicher:
- Fig. 1: zeigt schematisch eine Ausführungsform eines Teils eines erfindungsgemäßen Transportbandes, bei dem ein GN Behälter in einer Zwischenposition während des Beladens durch einen Nutzer oder Bediener gezeigt ist, in einer Ansicht quer zur Transportrichtung des Transportbandes,
- Fig. 2: zeigt schematisch eine Ausführungsform eines Teils des in Fig. 1 gezeigten erfindungsgemäßen Transportbandes, bei dem der GN Behälter in seiner endgültigen Position auf dem Transportband gezeigt ist, ebenfalls in Ansicht quer zur Transportrichtung des Transportbandes,
- Fig. 3: zeigt schematisch eine perspektivische Ansicht einer Ausführungsform eines Positionierungs-Auflage-Elements,
- Fig. 4: zeigt schematisch einen Teilquerschnitt durch die in Fig. 3 gezeigte Ausführungsform eines Positionierungs-Auflage-Elements und
- Fig. 5: zeigt schematisch eine perspektivische Ansicht einer Ausführungsform eines Segments eines erfindungsgemäßen Transportbandes.

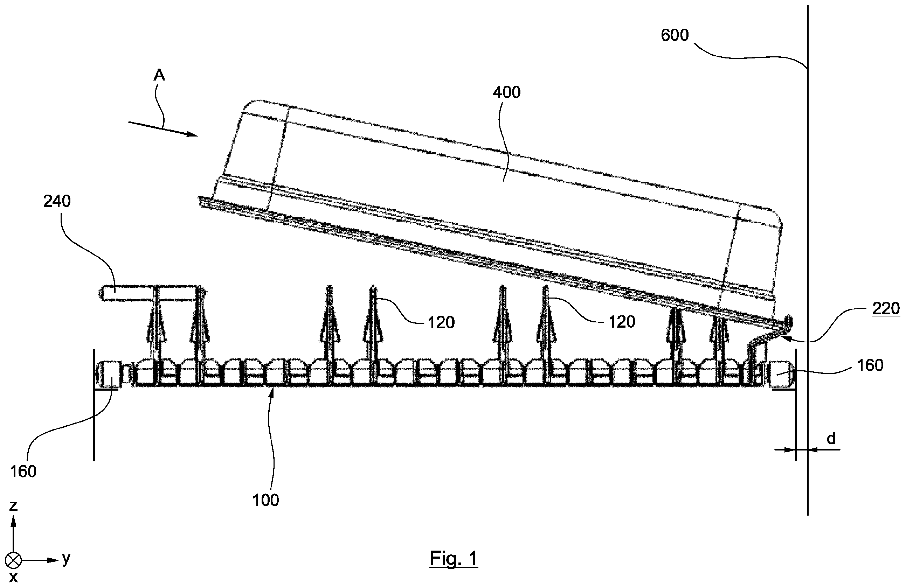

Fig. 1 zeigt schematisch eine Ausführungsform eines Teils eines erfindungsgemäßen Transportbandes 100, wobei das hier gezeigte Transportband 100 aus mehreren Einzelgliedern besteht. Die in Fig. 1 gezeigte Ausführungsform des Transportbandes 100 umfasst mehrere Haltevorrichtungen 120, die bei dieser Ausführungsform als Haltefinger ausgebildet sind und die sich in einer im Wesentlichen senkrechten Richtung (z-Richtung) von der durch das Transportband 100 gebildeten Bandunterlage vertikal nach oben erstrecken und die für die Aufnahme von zu reinigenden Gerätschaften, insbesondere Gläsern oder ähnlichem Spülgut, vorgesehen sind.

Fig. 1 zeigt das Transportband 100 in einer Ansicht quer zur Transportrichtung des Transportbandes, d. h. dass Transportband 100 bewegt sich in einer Transportrichtung (x-Richtung), die sich normal zur Darstellungsebene der Fig. 1 erstreckt.

Wie in Fig. 1 ersichtlich weist das Transportband 100 an seinen beiden Seiten, in Fig. 1 links und rechts, Bandrollen 160 auf, die zur Positionierung und für den Transport des Transportbandes innerhalb der Transportspülmaschine dienen.

Das Transportband 100 weist auf seiner in Fig. 1 rechten Seite, die einer Maschinenrückwand 600 zugewandt und daher von einer Bedienerseite, in Fig. 1 auf der linken Seite, abgewandt ist, mehrere Positionierungs-Auflage-Elemente 220 auf, von denen in Fig. 1 nur eines sichtbar ist.

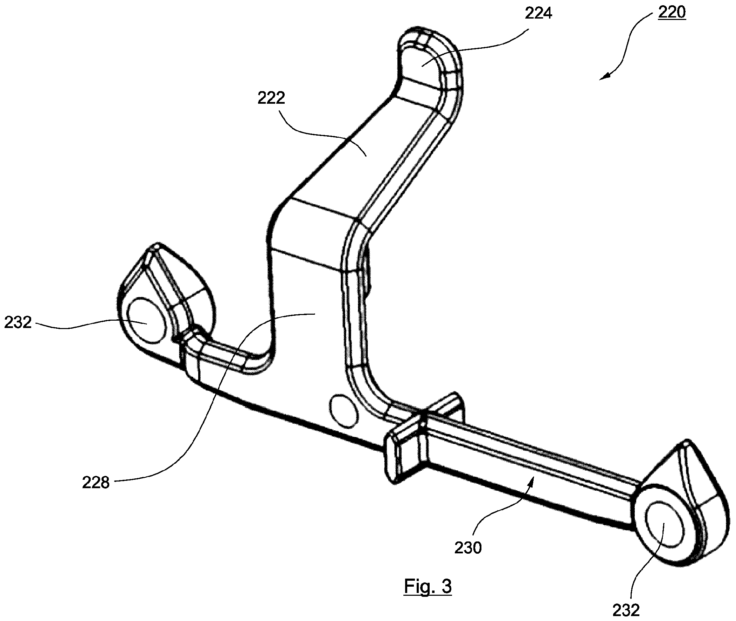

Die Positionierungs-Auflage-Elemente 220 weisen insbesondere einen Auflagebereich und einen Anschlag auf. Im Hinblick auf die besondere Form der Positionierungs-Auflage-Elemente 220 wird auf Fig. 3 und die nachfolgende Beschreibung verwiesen.

Das Transportband 100 weist ferner auf einer in Fig. 1 linken Seite, also auf der Bedienerseite, mehrere Aufnahmevorrichtungen 240 auf, von denen ebenfalls in Fig. 1 nur eine sichtbar ist. Die Aufnahmevorrichtungen 240 sind damit in einer Breitenrichtung des Transportbandes (y-Richtung), in Fig. 1 von links nach rechts und senkrecht oder normal zur Transportrichtung, an Positionen vorgesehen, die den Positionen der Positionierungsauflage Elemente gegenüberliegenden.

Die Aufnahmevorrichtungen 240 sind bei dieser Ausführungsform jeweils an zwei Haltevorrichtungen 120 befestigt.

Eine solche Ausführungsformen eines erfindungsgemäßen Transportbandes 100 ermöglicht ein besonders vorteilhaftes und sicheres Einsetzen eines Gastronorm-Behälters oder GN Behälter 400: Fig. 1 zeigt einen GN Behälter 400 in einer ersten Position beim Einsetzen des GN Behälters durch einen Bediener. Wie in Fig. 1 gut ersichtlich ist, kann der Bediener die von ihm abgewandte untere Kante des GN Behälters (in Fig. 1 auf der rechten, unteren Seite) an einer beliebigen Stelle des Auflagebereichs eines oder mehrerer Positionierungs-Auflage-Elemente 220 aufsetzen bzw. ablegen, und dann den GN Behälter von der Bedienerseite (in Fig. 1 linke Seite) in Richtung auf die Maschinenrückwand 600 (in Fig. 1 auf der rechten Seite) schieben (siehe Pfeil A), bis die hintere, untere Kante des GN Behälters (in Fig. 1 auf der rechten Seite) an den Anschlag des oder der Positionierungs-Auflage-Elemente 220 anstößt. Im Hinblick auf den Auflagebereich (222, siehe Fig. 3, schiefe oder schräge Erstreckung) und den Anschlag (224, siehe Fig. 3, senkrechte, vertikale Erstreckung) wird auf die Fig. 3 und die nachfolgende Beschreibung verwiesen.

Wenn der GN Behälter, wie in Fig. 1 gezeigt, auf dem Auflagebereich des oder der Positionierungs-Auflage-Elemente 220 aufgelegt ist, insbesondere und bevorzugt wenn der GN Behälter 400, wie ebenfalls in Fig. 1 gezeigt, bis an den Anschlag des oder der Positionierungs-Auflage-Elemente 220 geschoben ist, kann der Benutzer den GN Behälter 400 auf der ihm zugewandten Seite, der Benutzerseite, in Fig. 1 der linken Seite, einfach auf der oder den Aufnahmevorrichtungen 240 ablegen.

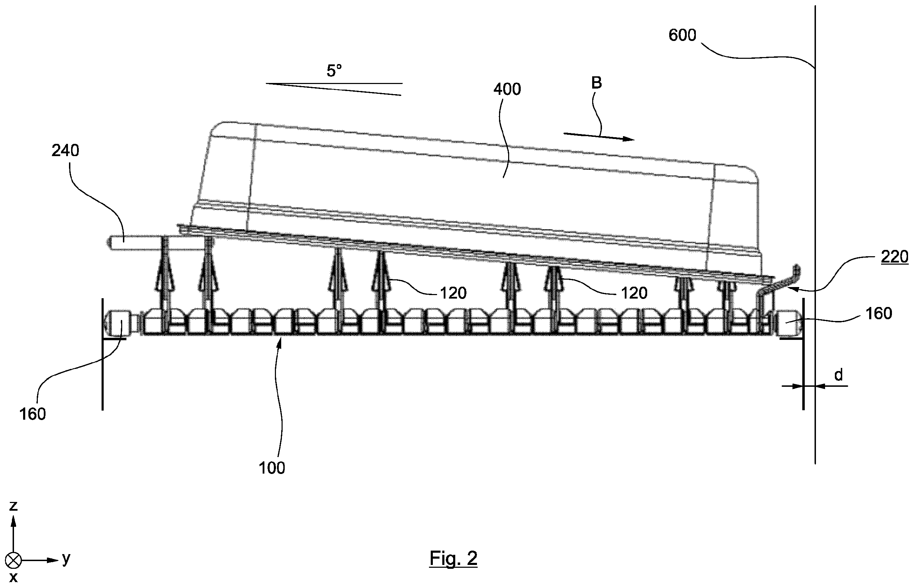

Damit ist automatisch eine korrekte und sichere Positionierung des GN Behälters 400 auf den Transportband 100 gesichert, wie es in Fig. 2 dargestellt ist. Wie in Fig. 2 ersichtlich, muss dabei nicht zwangsweise der GN Behälter 400 exakt an dem Anschlag anliegen.

Wie gut in Fig. 2 ersichtlich ist, befindet sich der GN Behälter 400 in einer korrekten Position und ausschließlich im Bereich der Breitenerstreckung (in Fig. 1 und in Fig. 2 von links nach rechts) des Transportbandes 100, sodass der GN Behälter 400 seitlich nicht über das Transportband 100 herausragen kann, wodurch, wie oben beschrieben, sichergestellt wird, dass der GN Behälter 400 nicht an anderen Elementen der Transportspülmaschine anstößt und den Spülbetrieb behindert.

Wie ebenfalls gut in Fig. 1 und in Fig. 2 ersichtlich ist, erstrecken sich bei dieser bevorzugten Ausführungsform die Positionierungs-Auflage-Elemente 220 in seitlicher Richtung über die Bandrollen 160, sodass insbesondere die Bandrollen 160 gegenüber dem GN Behälter 400 abgeschirmt sind und der GN Behälter 400 nicht auf den Bandrollen 160 aufliegen und/oder deren Betrieb behindern kann.

Bei dieser Ausführungsform erstrecken sich auch die auf der Bedienerseite angeordneten Aufnahmevorrichtungen 240 in einer Breitenrichtung oder einer seitlichen Richtung des Transportbandes auf der der Bedienerseite zugewandten Seite ebenfalls über die Bandrollen 160, sodass auch an dieser Seite die Bandrollen 160 von dem GN Behälter 400 abgeschirmt und geschützt sind.

Wie ebenfalls gut in Fig. 2 ersichtlich, ist der GN Behälter in seiner endgültigen, korrekten Position um einen Winkel, bei dieser Ausführungsform 5°, geneigt. Damit wird sichergestellt, dass Prozesswasser, dass sich auf der Oberfläche des GN Behälters sammelt, in Richtung auf eine Maschinerückseite oder in Richtung auf die Maschinenrückwand 600 abfließen kann (siehe Pfeil B). Dies hat auch den weiteren Vorteil, dass die Flüssigkeit bzw. dass Prozesswasser von der Bedienerseite weggeführt wird.

Ferner, wie ebenfalls gut in Fig. 1 und in Fig. 2 ersichtlich ist, ist das Transportband 100 und/oder sind die Positionierungs-Auflage-Elemente 220 so angeordnet und ausgebildet, dass ein Zwischenraum d zwischen dem oder den Positionierungs-Auflage-Elementen 220 und einer stationären Seitenführung der Geschirrspülmaschine, insbesondere einer Maschinenrückwand 600 der Geschirrspülmaschine, so klein ist/sind, dass kein GN-Behälter oder Teil eines GN-Behälters in diesem Zwischenraum d eindringen bzw. eingelegt werden kann. Bei bevorzugten Ausführungsformen weist der Zwischenraum d eine Breite von etwa 0,5 cm bis 2 cm, bevorzugt von 0,5 cm bis 1,5 cm auf. Auch dies sichert zusätzlich eine korrekte Positionierung der GN Behälter, selbst bei sehr unsachgemäßer Bedienung durch ungeübtes Personal.

Fig. 3 zeigt schematisch eine perspektivische Ansicht einer bevorzugten Ausführungsform eines Positionierungs-Auflage-Elements 220. Das Positionierungs-Auflage-Element 220 umfasst eine Strebe oder einen Grundbereich 230, der sich bei dieser Ausführungsform im wesentlichen in einer Längsrichtung des Transportbandes, also in Richtung der Transportrichtung, erstreckt. Von diesem Grundbereich 230 erstreckt sich ein im wesentlichen vertikaler Bereich 228, an den sich der Auflagebereich 222 anschließt.

Der Auflagebereich 222 ist schräg angeordnet, wobei der Auflagebereich 222 bei dieser Ausführungsform mit der Vertikalen (z-Richtung) einen Winkel von 70° bildet. Der kleinere Winkel, der zwischen dem vertikalen Bereich 228 und dem Auflagebereich 222 gebildet wird, in der perspektivischen Darstellung in Fig. 3 im hinteren Bereich, beträgt daher 110°.

An den Auflagebereich 220 schließt sich der Anschlag 224 an, der sich wiederum in einer vertikalen Richtung erstreckt.

Diese Ausführungsform des Positionierungs-Auflage-Elements 220 eignet sich insbesondere für Transportbänder, die aus Einzelgliedern bestehen, die miteinander verbunden werden, um das Transportband zu bilden. Diese Ausführungsform des Positionierungs-Auflage-Element 220 umfasst daher auch zwei Durchführungen 232, durch die Verbindungsstangen (nicht gezeigt) geführt werden können, die zum einen die einzelnen Glieder teilweise miteinander verbinden und die zum anderen zur Aufnahme von Bandrollen geeignet sind.

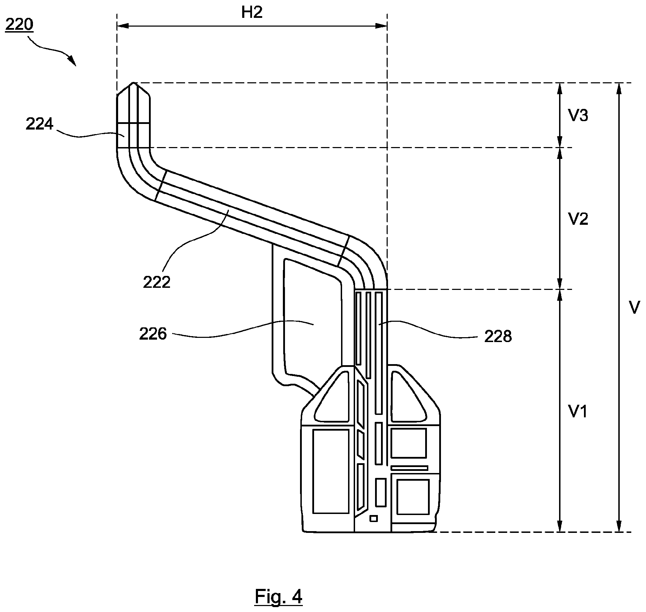

Fig. 4 zeigt einen Querschnitt der Ausführungsform des Positionierungs-Auflage-Elements 220, wie es in Fig. 3 gezeigt ist. Deutlich erkennt man in Fig. 4 die vertikale Erstreckung des vertikalen Bereichs 228, die sich daran anschließende geneigte Erstreckung des Auflagebereich 222 und den sich wieder vertikal erstreckenden Anschlag 224.

Wie in Fig. 4 ebenfalls ersichtlich ist, ist zwischen dem vertikalen Bereichs 228 und dem Auflagebereich 222 eine Stützrippe 226 vorgesehen, die die Stabilität des Positionierungs-Auflage-Elementes 220 unterstützt und insbesondere die vorbestimmte Schräge und den Winkel des Auflagebereich 222 relativ zu dem vertikalen Bereich 228 sicherstellt. Die Stützrippe 226 leitet die Kraft auf das Metall-Kettenglied vom Band weiter.

Bei der in den Fig. 3 und in Fig. 4 gezeigten Ausführungsform des Positionierungs-Auflage-Elements 220 erstreckt sich der gesamte vertikale Bereich V über eine Höhe von etwa 6,2 cm wobei bei anderen Ausführungsformen Höhen von 2 cm bis 8 cm möglich sind. Der beschriebene gesamte vertikale Bereich V teilt sich in drei vertikale Unter-Bereiche V1, V2 und V3 auf. Der erste vertikale Unter-Bereich V1 hat bei dieser Ausführungsform eine Höhe von etwa 3,3 cm, bei anderen Ausführungsformen ist jedoch auch eine vertikale Höhe in einem Bereich von 1 bis 4 cm möglich. Der zweite vertikale Unter-Bereich V2 beinhaltet den Auflagebereich 222 und hat eine vertikale Höhe von ca. 2 cm, wobei bei anderen Ausführungsformen eine vertikale Höhe in einem Bereich von 2 bis 6 cm möglich ist. In einer horizontalen Richtung erstreckt sich der zweite vertikale Unter-Bereich V2 bei dieser Ausführungsform über eine Länge H2 von etwa 3,5 cm, wobei bei anderen Ausführungsformen horizontale Erstreckungen in einem Bereich von ca. 2 cm bis 6 cm möglich sind. Der dritte vertikale Unter- Bereich V3 beinhaltet den Anschlag 224 und hat eine vertikale Höhe von etwa 0,9 cm, wobei bei anderen Ausführungsformen auch eine vertikale Höhe in einem Bereich von ca. 0,5 bis 2 Zentimetern möglich ist.

Bei dieser Ausführungsform erstreckt sich der Anschlag 224 ausschließlich in einer vertikalen Richtung. Bei anderen Ausführungsformen ist es jedoch auch möglich, dass die Erstreckung des Anschlag 224 zusätzlich eine horizontale Komponente aufweist. Bei besonders bevorzugten Ausführungsformen sind solche gegenüber der Vertikalen geneigte Anschläge so ausgebildet, dass sie innerhalb eines Winkels von +20° bis -20°, bevorzugt innerhalb eines Winkels von +10° bis -10° relativ zur Vertikalen liegen. Die Neigung des Anschlags gegenüber der Vertikalen erfolgt bevorzugt in einer Richtung senkrecht zur Transportrichtung des Transportbandes.

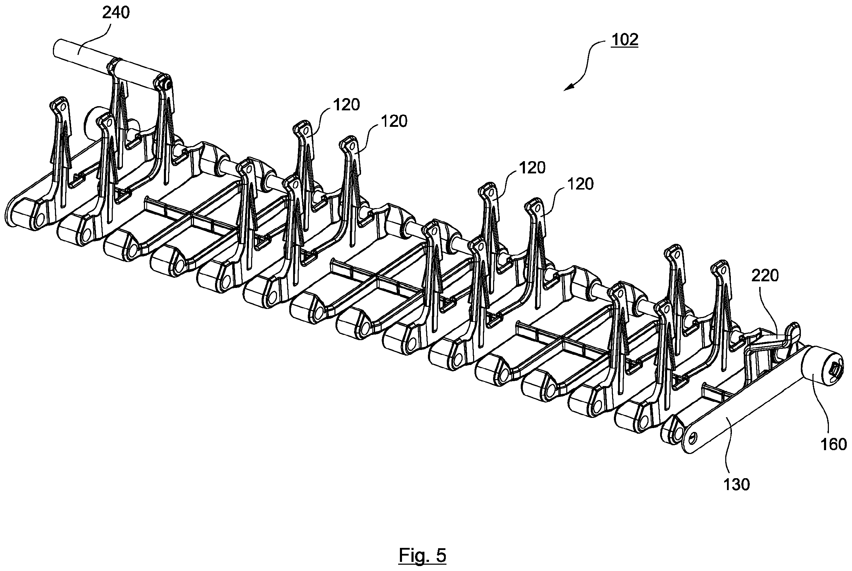

Fig. 5 schließlich zeigt schematisch eine perspektivische Ansicht eine Ausführungsform eines Segments 102 eines erfindungsgemäßen Transportbandes 100, das mehrere Haltevorrichtungen 120 und ein Positionierungs-Auflage-Element 220 umfasst, wie sie in Zusammenhang mit den obigen Figuren beschrieben worden sind, auf die diesbezüglich verwiesen wird, um Wiederholungen zu vermeiden.

Das Positionierungs-Auflage Element 220 umfasst auch bei dieser Ausführungsform eine Stützrippe (siehe Fig. 4, Stützrippe 226), die die Stabilität des Positionierungs-Auflage-Elementes 220 unterstützt und eventuell auftretende Kräfte insbesondere auf das Stützglied 130 weiterleitet, das besonders stabil und verwindungssteif ist. Bei dieser Ausführungsform ist das Stützglied 130 aus Metall hergestellt, um eine besonders hohe Stabilität zu erzeugen.

## Patentansprüche

1. Transportband (100) für eine Transportspülmaschine zur Aufnahme von zu reinigenden Gerätschaften, die mittels des Transportbandes (100) in einer Transportrichtung durch die Transportspülmaschine geführt werden können, wobei das Transportband (100) eine im wesentlichen ebene Bandunterlage für die zu reinigenden Gerätschaften und eine in einer Richtung senkrecht zur Transportrichtung vorgegebene Breite aufweist, **dadurch gekennzeichnet, dass** das Transportband (100) an einem Seitenbereich mehrere Positionierungs-Auflage-Elemente (220) aufweist, die sich in einer Richtung senkrecht zu der von der Bandunterlage gebildeten Ebene in eine vorgegebene erste Höhe erstrecken und in einer vorgegebenen zweiten Höhe über der von der Bandunterlage gebildeten Ebene einen Auflagebereich (222) zur Auflage eines Teils einer zu reinigenden Gerätschaft aufweisen, wobei sich der Auflagebereich (222) über eine vorgegebene Länge in einer Richtung senkrecht zur Transportrichtung und parallel zur Bandunterlage erstreckt und wobei der Auflagebereich (222) in der Richtung senkrecht zur Transportrichtung gegenüber der Bandunterlage geneigt ausgebildet ist, sodass der Auflagebereich (222) in einer Richtung von dem Seitenbereich zu einem zentralen Bereich des Transportbandes (100) eine abfallende Höhe über der Bandunterlage aufweist,
wobei
der Auflagebereich (222) an seinem in Breitenrichtung des Transportbandes (100) äußeren Ende mit einem Anschlag (224) zur Positionierung eines Gastronorm-Behälters auf dem Transportband (100) versehen ist,
an in Breitenrichtung des Transportbands (100) den Positionierungs-Auflage-Elemente (220) gegenüberliegenden Positionen des Transportbandes (100) mehrere Aufnahmevorrichtungen (240) vorgesehen sind, die in einer vorgegebenen dritten Höhe über der von der Bandunterlage gebildeten Ebene angeordnet sind, und
wobei die Aufnahmevorrichtungen (240) oder Auflageflächen der Aufnahmevorrichtungen (240) in einer Höhe über der von der Bandunterlage gebildeten Ebene angeordnet sind, die oberhalb der Höhe liegt, in der sich der Auflagebereich (222) der Positionierungs-Auflage-Elemente (220) erstreckt.

2. Transportband (100) nach Anspruch 1, **dadurch gekennzeichnet, dass** der Auflagebereich (222) der Positionierungs-Auflage-Elemente (220) gegenüber der Bandunterlage in der Richtung senkrecht zur Transportrichtung gegenüber der Bandunterlage um einen Winkel α in einem Bereich von 5° bis 40° geneigt ist, bevorzugt in einem Bereich von 10° bis 30° geneigt ist, insbesondere bevorzugt in einem Bereich von 15° bis 25° geneigt ist.

3. Transportband (100) nach Anspruch 1 oder 2, **dadurch gekennzeichnet, dass** die Aufnahmevorrichtungen (240) und die Positionierungs-Auflage-Elemente (220) so angeordnet und ausgebildet sind, dass eine zu reinigende Gerätschaft, insbesondere ein Gastronorm-Behälter (GN), die oder der so auf das Transportband (100) gesetzt wird, dass sie oder er sowohl auf zumindest einer Aufnahmevorrichtung (240) oder einer Auflagefläche einer Aufnahmevorrichtung (240) als auch auf zumindest einem Auflagebereich (222) eines Positionierungs-Auflage-Elemente (220) aufliegt,
wobei vorzugsweise die Aufnahmevorrichtungen (240) und die Positionierungs-Auflage-Elemente (220) so angeordnet und ausgebildet sind, dass die zu reinigende Gerätschaft gegenüber der Bandunterlage um einen Winkel β in einem Bereich von 2° bis 15°, insbesondere in einem Bereich von 2° bis 10°, insbesondere in einem Bereich von 3° bis 8° geneigt ist.

4. Transportband (100) nach einem der vorhergehenden Ansprüche, **dadurch gekennzeichnet, dass** das Transportband (100) an seinen beiden Seitenrändern jeweils mit mehreren Bandrollen (160) versehen ist, mittels denen das Transportband (100) in der Transportspülmaschine positioniert und/oder geführt wird.

5. Transportband (100) nach Anspruch 4, **dadurch gekennzeichnet, dass** sich der Auflagebereich (222) mindestens eines Positionierungs-Auflage-Elementes (220) in einer seitlichen Richtung so erstreckt, dass er zumindest teilweise einen Bereich überragt, in dem die Bandrollen (160) angeordnet sind.

6. Transportband (100) nach Anspruch 4 oder 5, **dadurch gekennzeichnet, dass** sich der Auflagebereich (222) mindestens eines Positionierungs-Auflage-Elementes (220) in einer seitlichen Richtung vollständig über eine oder mehrere Bandrollen (160) erstreckt.

7. Transportband (100) nach einem der vorhergehenden Ansprüche, **dadurch gekennzeichnet, dass** sich der Auflagebereich (222) zumindest eines Positionierungs-Auflage-Elementes (220) geradlinig oder im Wesentlichen gradlinig erstreckt,
und/oder **dadurch gekennzeichnet, dass** der Auflagebereich (222) der Positionierungs-Auflage-Elemente (220) eine vorgegebene Breite von mindestens 0,5 cm, bevorzugt von mindestens 1 cm, aufweist,
und/oder **dadurch gekennzeichnet, dass** der Auflagebereich (222) mindestens eines Positionierungs-Auflage-Elementes (220) eine Ebene bildet, die um einen Winkel α gegenüber der von der Bandunterlage gebildeten Ebene geneigt ist.

8. Transportband (100) nach einem der vorhergehenden Ansprüche, **dadurch gekennzeichnet, dass** der Auflagebereich (222) mindestens eines Positionierungs-Auflage-Elemente (220) gekrümmt ausgebildet ist.

9. Transportband (100) nach einem der vorhergehenden Ansprüche, **dadurch gekennzeichnet, dass** mindestens eines der Positionierungs-Auflage-Elemente (220) lösbar und wiederbefestigbar an dem Transportband (100) angebracht ist.

10. Transportband (100) nach einem der vorhergehenden Ansprüche, **dadurch gekennzeichnet, dass** der Anschlag (224) des Auflagebereichs (222) der Positionierungs-Auflage-Elemente (220) sich in einer Richtung senkrecht oder im Wesentlichen senkrecht zur durch die Bandunterlage gebildeten Ebene erstreckt,
und/oder **dadurch gekennzeichnet, dass** der Anschlag (224) des Auflagebereichs (222) der Positionierungs-Auflage-Elemente (220) sich über eine Höhe zwischen 0,5 cm und 10 cm, bevorzugt zwischen 0,5 cm und 5 cm über die Höhe des seitlichen Endes des Auflagebereich (222) erstreckt.

11. Transportband (100) nach einem der vorhergehenden Ansprüche, **dadurch gekennzeichnet, dass** das Transportband (100) mindestens zwei Paare von in Transportrichtung benachbart angeordneten Positionierungs-Auflage-Elementen (220) umfasst, wobei die zwei benachbart angeordneten Positionierungs-Auflage-Elemente (220) jedes Paars in einem vorgegebenen, gleichen Abstand voneinander in Transportrichtung angeordnet sind,
und/oder **dadurch gekennzeichnet, dass** das Transportband (100) eine Mehrzahl von Positionierungs-Auflage-Elementen (220) umfasst, die sich über die gesamte Länge des Transportbandes (100) in Transportrichtung erstrecken, wobei jeweils zwei benachbart angeordnete Positionierungs-Auflage-Elemente (220) der Mehrzahl von Positionierungs-Auflage-Elementen (220) in einem vorgegebenen, gleichen Abstand in Transportrichtung voneinander angeordnet sind.

12. Transportband (100) nach einem der vorhergehenden Ansprüche, **dadurch gekennzeichnet, dass** das Transportband (100) aus einer Mehrzahl einzelner Transportband-Segmente (102) besteht, die miteinander befestigt sind.

13. Transportband-Segment (102) für ein Transportband (100), **dadurch gekennzeichnet, dass** das Transportband-Segment (102) an einem Seitenbereich ein oder mehrere Positionierungs-Auflage-Elemente (220) aufweist, das oder die sich in einer Richtung senkrecht zu der von der Bandunterlage gebildeten Ebene in eine vorgegebene erste Höhe erstrecken und in einer vorgegebenen zweiten Höhe über der von der Bandunterlage gebildeten Ebene einen Auflagebereich (222) zur Auflage eines Teils einer zu reinigenden Gerätschaft aufweisen, wobei sich der Auflagebereich (222) über eine vorgegebene Länge in einer Richtung senkrecht zur Transportrichtung und parallel zur Bandunterlage erstreckt und wobei der Auflagebereich (222) in der Richtung senkrecht zur Transportrichtung und parallel zur Bandunterlage gegenüber der Bandunterlage geneigt ausgebildet ist, sodass der Auflagebereich (222) in einer Richtung von dem Seitenbereich zu einem zentralen Bereich des Transportband-Segments eine abfallende Höhe über der Ebene der Bandunterlage aufweist,
wobei der Auflagebereich (222) an seinem in Breitenrichtung des Transportband-Segments äußeren Ende mit einem Anschlag (224) zur Positionierung eines Gastronorm-Behälters auf dem Transportband (100) versehen ist,
an in Breitenrichtung des Transportbands (100) den Positionierungs-Auflage-Elemente (220) gegenüberliegenden Positionen des Transportbandes (100) mehrere Aufnahmevorrichtungen (240) vorgesehen sind, die in einer vorgegebenen dritten Höhe über der von der Bandunterlage gebildeten Ebene angeordnet sind, und
dadurch dass die Aufnahmevorrichtungen (240) oder Auflageflächen der Aufnahmevorrichtungen (240) in einer Höhe über der von der Bandunterlage gebildeten Ebene angeordnet sind, die oberhalb der Höhe liegt, in der sich der Auflagebereich (222) der Positionierungs-Auflage-Elemente (220) erstreckt.

14. Transportspülmaschine mit einem Transportband (100) nach einem der Ansprüche 1 bis 12 oder mit mindestens zwei Transportband-Segmenten (102) nach Anspruch 13.

15. Transportspülmaschine nach Anspruch 14, **dadurch gekennzeichnet, dass** es sich um eine Mehrtank-Transportspülmaschine handelt.

## Claims

1. A conveyor belt (100) for a transport dishwasher for receiving equipment to be cleaned which can be guided by means of the conveyor belt (100) in a transport direction through the transport dishwasher, the conveyor belt (100) having a substantially flat belt surface for the equipment to be cleaned and a predetermined width in a direction perpendicular to the transport direction,
**characterized in that**
the conveyor belt (100) has multiple positioning support elements (220) on a side area, said positioning support elements extend at a predetermined first height in a direction perpendicular to the plane formed by the belt surface and have, at a predetermined second height above the plane formed by the belt surface, a support area (222) for supporting a part of the equipment to be cleaned, the support area (222) extending over a predetermined length in a direction perpendicular to the transport direction and parallel to the belt surface, and the contact area (222) being inclined in the direction perpendicular to the transport direction with respect to the belt surface so that the support area (222) has a height above the belt surface sloping down in a direction from the side area to the central area of the conveyor belt (100),
wherein
on its outer end in the width direction of the conveyor belt (100), the support area (222) is provided with a stop (224) for positioning a gastronorm container on the conveyor belt (100),
multiple receiving devices (240), which are arranged at a predetermined third height above the plane formed by the belt surface, are provided at positions of the conveyor belt (100) opposite to the positioning support elements (220) in the width direction of the conveyor belt (100), and
wherein the receiving devices (240) or the support surfaces of the receiving devices (240) are arranged at a height above the plane formed by the belt surface, which height is above the height at which the support area (222) of the positioning support elements (220) extends.

2. The conveyor belt (100) according to claim 1, **characterized in that** the support area (222) of the positioning support elements (220) is inclined with respect to the belt surface at an angle α in a range from 5° to 40°, preferably inclined in a range from 10° to 30°, particularly preferably inclined in a range from 15° to 25° in the direction perpendicular to the transport direction with respect to the belt surface.

3. The conveyor belt (100) according to claim 1 or 2, **characterized in that** the receiving devices (240) and the positioning support elements (220) are arranged and designed such that equipment to be cleaned, in particular a gastronorm container (GN), is placed on the conveyor belt (100), such that it contacts both at least one receiving device (240) or one support surface of the receiving device (240) and also contacts at least one support area (222) of a positioning support element (220),
wherein the receiving devices (240) and the positioning support elements (220) are preferably arranged and designed such that the equipment to be cleaned is inclined with respect to the belt surface at an angle β in a range from 2° to 15°, preferably in a range from 2° to 10°, particularly in a range from 3° to 8°.

4. The conveyor belt (100) according to one of the preceding claims, **characterized in that** the conveyor belt (100) is respectively provided on its two side edges with a plurality of belt rollers (160), by means of which the conveyor belt (100) is positioned and/or guided in the transport dishwasher.

5. The conveyor belt (100) according to claim 4, **characterized in that** the support area (222) of at least one positioning support element (220) extends in a lateral direction such that it projects at least partially over an area in which the belt rollers (160) are arranged.

6. The conveyor belt (100) according to claim 4 or 5, **characterized in that** the support area (222) of at least one positioning support element (220) extends in a lateral direction completely over one or more belt rollers (160).

7. The conveyor belt (100) according to one of the preceding claims, **characterized in that** the support area (222) of at least one positioning support element (220) extends in a straight line or substantially in a straight line,
and/or **characterized in that** the support area (222) of the positioning support element (220) has a predetermined width of at least 0.5 cm, preferably of at least 1 cm,
and/or **characterized in that** the support area (222) of at least one positioning support element (220) forms a plane which is inclined at an angle α with respect to the plane formed by the belt surface.

8. The conveyor belt (100) according to one of the preceding claims, **characterized in that** the support area (222) of at least one positioning support element (220) is designed as curved.

9. The conveyor belt (100) according to one of the preceding claims, **characterized in that** at least one of the positioning support elements (220) is detachably and refastenably mounted on the conveyor belt (100).

10. The conveyor belt (100) according to one of the preceding claims, **characterized in that** the stop (224) of the support area (222) of the positioning support element (220) extends in a direction perpendicular to or substantially perpendicular to the plane formed by the belt surface,
and/or **characterized in that** the stop (224) of the support area (222) of the positioning support element (220) extends over a height of between 0.5 cm and 10 cm, preferably between 0.5 cm and 5 cm, above the height of the lateral end of the support area (222).

11. The conveyor belt (100) according to one of the preceding claims, **characterized in that** the conveyor belt (100) comprises at least two pairs of positioning support elements (220) arranged adjacently in the transport direction, the two adjacently arranged positioning support elements (220) of each pair being arranged in a predetermined, identical distance from one another in the transport direction,
and/or **characterized in that** the conveyor belt (100) comprises a plurality of positioning support elements (220) which extend over the entire length of the conveyor belt (100) in the transport direction, two adjacently arranged positioning support elements (220) of the plurality of positioning support elements (220) being respectively arranged in a predetermined, identical spacing from one another in the transport direction.

12. The conveyor belt (100) according to one of the preceding claims, **characterized in that** the conveyor belt (100) consists of a plurality of individual conveyor belt segments (102) which are fastened to one another.

13. A conveyor belt segment (102) for a conveyor belt (100), **characterized in that** the conveyor belt segment (102) has one or more positioning support elements (220) on a side area, said positioning support elements extend at a predetermined first height in a direction perpendicular to the plane formed by the belt surface and have, at a predetermined second height above the plane formed by the belt surface, a support area (222) for supporting a part of the equipment to be cleaned, the support area (222) extending over a predetermined length in a direction perpendicular to the transport direction and parallel to the belt surface, and the contact area (222) being inclined in the direction perpendicular to the transport direction and parallel to the belt surface so that the support area (222) has a height above the plane of the belt surface sloping down in a direction from the side area to the central area of the conveyor belt segment (102),
wherein
on its outer end in the width direction of the conveyor belt segment, the support area (222) is provided with a stop (224) for positioning a gastronorm container on the conveyor belt (100),
multiple receiving devices (240), which are arranged at a predetermined third height above the plane formed by the belt surface, are provided at positions of the conveyor belt (100) opposite to the positioning support elements (220) in the width direction of the conveyor belt (100), and
that the receiving devices (240) or the support surfaces of the receiving devices (240) are arranged at a height above the plane formed by the belt surface, which height is above the height at which the support area (222) of the positioning support elements (220) extends.

14. A transport dishwasher with a conveyor belt (100) according to one of claims 1 to 12 or with at least two conveyor belt segments (102) according to claim 13.

15. The transport dishwasher according to claim 14, **characterized in that** it is a multi-tank transport dishwasher.

## Revendications

1. Bande transporteuse (100) pour lave-vaisselle à transporteur pour la prise en charge d'appareils à nettoyer, qui peuvent être guidés au moyen de la bande de transport (100) dans une direction de transport à travers le lave-vaisselle à transporteur, dans lequel le bande transporteuse (100) comprend un support de bande globalement plat pour les appareils à nettoyer et présente une largeur prédéterminée dans une direction perpendiculaire à la direction de transport,
**caractérisée en ce que**
la bande transporteuse (100) comprend, sur une partie latérale, plusieurs éléments d'appui de positionnement (220) qui s'étendent dans une direction perpendiculaire au plan formé par le support de bande dans une première hauteur prédéterminée et qui présentent dans une deuxième hauteur prédéterminée, au-dessus du plan formé par le support de bande, une partie d'appui (222) pour l'appui d'une pièce d'un appareil à nettoyer, dans lequel la partie d'appui (222) s'étend sur une longueur prédéterminée dans une direction perpendiculaire à la direction de transport et parallèle au support de bande et dans lequel la partie d'appui (222) est réalisée de manière inclinée par rapport au support de bande dans la direction perpendiculaire à la direction de transport, de sorte que la partie d'appui (222) présente, dans une direction de la partie latérale vers une partie centrale de la bande transporteuse (100), une hauteur décroissante au-dessus du support de bande,
dans lequel
la partie d'appui (222) est munie, sur son extrémité externe dans la direction de la largeur de la bande transporteuse (100), d'une butée (224) pour le positionnement d'un récipient gastronorm sur la bande transporteuse (100),
à des positions de la bande transporteuse (100) qui font face aux éléments d'appui de positionnement (220), dans la direction de la largeur de la bande transporteuse (100), sont prévus plusieurs dispositifs de prise en charge (240) qui sont disposés dans une troisième hauteur prédéterminée au-dessus du plan formé par le support de bande et
dans lequel les dispositifs de prise en charge (240) ou les surfaces d'appui des dispositifs de prise en charge (240) sont disposés dans une hauteur au-dessus du plan formé par le support de bande, qui se trouve au-dessus de la hauteur à laquelle s'étend la partie d'appui (222) des éléments d'appui de positionnement (220).

2. Bande transporteuse (100) selon la revendication 1, **caractérisée en ce que** la partie d'appui (222) des éléments d'appui de positionnement (220) est inclinée, par rapport au support de bande dans la direction perpendiculaire à la direction de transport par rapport au support de bande, d'un angle α de l'ordre de 5° à 40°, de préférence de l'ordre de 10° à 30°, plus particulièrement de préférence de l'ordre de 15° à 25°.

3. Bande transporteuse (100) selon la revendication 1 ou 2, **caractérisée en ce que** les dispositifs de prise en charge (240) et les éléments d'appui de positionnement (220) sont disposés et conçus de sorte qu'un appareil à nettoyer, plus particulièrement un récipient gastronorm (GN), qui est posé sur la bande transporteuse (100), de sorte qu'il s'appuie aussi bien sur au moins un dispositif de prise en charge (240) ou une surface d'appui d'un dispositif de prise en charge (240) que sur au moins une partie d'appui (222) d'un élément d'appui de positionnement (220),
dans lequel, préférence, les dispositifs de prise en charge (240) et les éléments d'appui de positionnement (220) sont disposés et conçus de sorte que l'appareil à nettoyer est incliné, par rapport au support de bande, d'un angle β de l'ordre de 2° à 15°, plus particulièrement de l'ordre de 2° à 10°, plus particulièrement de l'ordre de 3° à 8°.

4. Bande transporteuse (100) selon l'une des revendications précédentes, **caractérisée en ce que** la bande transporteuse (100) est munie, sur ses deux bords latéraux, respectivement de plusieurs rouleaux de bande (160) au moyen desquels la bande transporteuse (100) est positionnée et/ou guidée dans le lave-vaisselle à transporteur.

5. Bande transporteuse (100) selon la revendication 4, **caractérisée en ce que** la partie d'appui (222) d'au moins un élément d'appui de positionnement (220) s'étend dans une direction latérale de façon à dépasser au moins partiellement d'une partie dans laquelle sont disposés les rouleaux de bande (160).

6. Bande transporteuse (100) selon la revendication 4 ou 5, **caractérisée en ce que** la partie d'appui (222) d'au moins un élément d'appui de positionnement (220) s'étend dans une direction latérale entièrement au-dessus d'un ou plusieurs rouleaux de bande (160).

7. Bande transporteuse (100) selon l'une des revendications précédentes, **caractérisée en ce que** la partie d'appui (222) d'au moins un élément d'appui de positionnement (220) s'étend en ligne droite ou globalement en ligne droite.
et/ou **caractérisée en ce que** la partie d'appui (222) des éléments d'appui de positionnement (220) présente une largeur prédéterminée d'au moins 0,5 cm, de préférence d'au moins 1 cm,
et/ou **caractérisée en ce que** la partie d'appui (222) d'au moins un élément d'appui de positionnement (220) forme un plan qui est incliné d'un angle α par rapport au support de bande.

8. Bande transporteuse (100) selon l'une des revendications précédentes, **caractérisée en ce que** la partie d'appui (222) d'au moins un élément d'appui de positionnement (220) est incurvée.

9. Bande transporteuse (100) selon l'une des revendications précédentes, **caractérisée en ce qu'**au moins un des éléments d'appui de positionnement (220) est monté de manière amovible et refixable sur la bande transporteuse (100).

10. Bande transporteuse (100) selon l'une des revendications précédentes, **caractérisée en ce que** la butée (224) de la partie d'appui (222) des éléments d'appui de positionnement (220) s'étend dans une direction perpendiculaire ou globalement perpendiculaire au plan formé par le support de bande,
et/ou **caractérisée en ce que** la butée (224) de la partie d'appui (222) des éléments d'appui de positionnement (220) s'étend à une hauteur entre 0,5 cm et 10 cm, de préférence entre 0,5 cm et 5 cm sur la hauteur de l'extrémité latérale de la partie d'appui (222).

11. Bande transporteuse (100) selon l'une des revendications précédentes, **caractérisée en ce que** la bande transporteuse (100) comprend au moins deux paires d'éléments d'appui de positionnement (220) adjacents dans la direction de transport, dans lequel les deux éléments d'appui de positionnement (220) adjacents de chaque paire sont disposés à une même distance prédéterminée entre eux dans la direction de transport,
et/ou **caractérisée en ce que** la bande transporteuse (100) comprend une pluralité d'éléments d'appui de positionnement (220) qui s'étendent sur toute la longueur de la bande transporteuse (100) dans la direction de transport, dans lequel, respectivement deux éléments d'appui de positionnement (220) adjacents de la pluralité d'éléments d'appui de positionnement (220) sont disposés à une même distance prédéterminée entre eux dans la direction de transport.

12. Bande transporteuse (100) selon l'une des revendications précédentes, **caractérisée en ce que** la bande transporteuse (100) est constituée d'une pluralité de segments de bande transporteuse (102) individuels, qui sont fixés les uns aux autres.

13. Segment de bande transporteuse (102) pour une bande transporteuse (100), **caractérisé en ce que** le segment de bande transporteuse (102) comprend, sur une partie latérale, un ou plusieurs éléments d'appui de positionnement (220) qui s'étendent, dans une direction perpendiculaire au plan formé par le support de bande, dans une première hauteur prédéterminée et, dans une deuxième hauteur prédéterminée au-dessus du plan formé par le support de bande, une partie d'appui (222) pour l'appui d'une pièce d'un appareil à nettoyer, dans lequel la partie d'appui (222) s'étend sur une longueur prédéterminée dans une direction perpendiculaire à la direction de transport et parallèle au support de bande et dans lequel la partie d'appui (222) est réalisée de manière inclinée, dans la direction perpendiculaire à la direction de transport et parallèle au support de bande, par rapport au support de bande, de sorte que la partie d'appui (222) présente, dans une direction de la partie latérale vers une partie centrale du segment de bande transporteuse, une hauteur décroissante au-dessus du plan du support de bande,
dans lequel la partie d'appui (222) est munie, au niveau de son extrémité externe dans la direction de la largeur du segment de bande transporteuse, d'une butée (224) pour le positionnement d'un récipient gastronorm sur la bande transporteuse (100),
à des positions de la bande transporteuse (100), dans la direction de la largeur de la bande transporteuse (100), qui font face aux éléments d'appui de positionnement (220), sont prévus plusieurs dispositifs de prise en charge (240) qui sont disposés dans une troisième hauteur prédéterminée au-dessus d'un plan formé par le support de bande et
**en ce que** les dispositifs de prise en charge (240) ou les surfaces d'appui des dispositifs de prise en charge (240) sont disposés à une hauteur au-dessus du plan formé par le support de bande qui se trouve au-dessus de la hauteur à laquelle s'étend la partie d'appui (222) des éléments d'appui de positionnement (220).

14. Lave-vaisselle à transporteur avec une bande transporteuse (100) selon l'une des revendications 1 à 12 ou avec au moins deux segments de bande transporteuse (102) selon la revendication 13.

15. Lave-vaisselle à transporteur selon la revendication 14, **caractérisé en ce qu'**il s'agit d'un lave-vaisselle à transporteur à réservoir multiple.
